# EUROPÄISCHE PATENTSCHRIFT

(11) **EP 1 613 638 B1**
(45) Veröffentlichungstag und Bekanntmachung des Hinweises auf die Patenterteilung: **07.08.2013**
(21) Anmeldenummer: 04724292.0
(22) Anmeldetag: 30.03.2004
(51) Int. Cl.: C07F 9/53

(54) **VERFAHREN ZUR HERSTELLUNG VON ACYLPHOSPHINOXID-FESTSTOFFEN**
METHOD FOR PRODUCING ACYLPHOSPHINE OXIDE SOLIDS
PROCEDE DE FABRICATION DE SOLIDES D'OXYDES D'ACYLPHOSPHINE

(30) Priorität: 04.04.2003 DE 10315671
(43) Veröffentlichungstag der Anmeldung: 11.01.2006
(73) Patentinhaber: BASF SE, 67056 Ludwigshafen (DE)
(72) Erfinder: BERTLEIN, Gerhard, 69151 Neckargemünd (DE); SCHALL, Karl, Heinz, 67354 Römerberg (DE); MAASE, Matthias, 67346 Speyer (DE); HEILEK, Jörg, 69245 Bammental (DE); BAUMANN, Dieter, 67227 Frankenthal (DE); ASCHERL, Hermann, 67246 Dirmstein (DE)
(86) Internationale Anmeldenummer: PCT/EP2004/003349
(87) Internationale Veröffentlichungsnummer: WO 2004/087723

(56) Entgegenhaltungen:
- DE-A- 3 139 984
- HEINZ G G O BECKER ET AL: "Organikum - Organisch-chemisches Grundpraktikum" 1986, VEB DEUTSCHER VERLAG DER WISSENSCHAFTEN , BERLIN , XP002311790 Seiten 34-35, Absatz 2.2.3

## Beschreibung

Die vorliegende Erfindung betrifft ein Verfahren zur Herstellung von festen Acylphosphinoxiden, indem man ein als Schmelze in kontinuierlicher Phase oder dispergiert vorliegendes Acylphosphinoxid unter mechanischer Beanspruchung, Scherung/innerer Bewegung der Schmelze in den festen Aggregatzustand überführt.

Die Herstellung fester Acylphosphinoxide ist z.B. bekannt aus EP-B1 7 508 (S.5, Z.19; S.11, Z.4 ff), DE-A1 30 20 092 (S.1 0, Z.29; S.11, Z.26 ff; S.12, Z.29 ff), DE-A1 31 39 984 (S.10, Z.16-25), EP-A2 73 413 (S.10, Beispiel 1), DE-A1 29 09 994, S. 14, Z. 28 - 32 oder EP-A2 184 095, S. 9, Z. 4 - 6 und Z.14 -17.

Demnach werden Acylphosphinoxide mit Endreinheit und als disperser Feststoff erhalten, indem man sie aus dem Reaktionsgemisch oder einer Lösung heraus, d.h. molekulardispers vorliegend, gegebenenfalls durch Fällung kristallisiert. Das in der Kristallisationslösung enthaltene Lösemittel, das sind organische Lösemittel oder Gemische davon, kann dabei bereits in der Reaktion anwesend gewesen sein, oder es wird als Lösemittel in der Aufarbeitung, insbesondere in einer Umkristallisation zugesetzt.

Nachteile einer Kristallisation aus einer Lösung heraus sind:
- Bedarf eines Lösemittels, das nach der Kristallisation entweder verworfen werden oder aber vor Wiederverwendung aufgearbeitet werden muss (Lösemittelkosten)
- Aufwand für die Abtrennung der Kristalle aus der Restlösung nach der Kristallisation (z.B. mit Filtern oder Zentrifugen)
- Aufwändige Trocknung der Kristalle, an denen nach Abtrennung ein Teil der Restlösung als Restfeuchte haften bleibt
- Eine reduzierte Ausbeute an Acylphosphinoxid, da in der nach Kristallisation verbleibenden Restlösung ein Teil des Acylphosphinoxids gelöst bleibt. Eine Rückgewinnung dieses Teils ist meist schwierig und aufwändig, und in der Regel nicht verlustfrei durchführbar
- Bei Verwendung organischer Lösemittel ein hoher verfahrenstechnischer Aufwand für sichere Handhabung der i.d.R. brennbaren Lösemittel und für die Vermeidung von Emissionen

Aufgabe der vorliegenden Erfindung war es, ein Verfahren für Acylphosphinoxide zur Verfügung zu stellen, das Feststoffe in einfacher und kostengünstiger Weise liefert. Die Aufgabe wurde gelöst durch ein Verfahren zur Herstellung von Acylphosphinoxid Feststoffen mit Schmelzpunkten oberhalb Raumtemperatur, in dem man das nach Reaktion oder Aufarbeitung als kontinuierliche Schmelzephase oder disperse Schmelzephase vorliegende Acylphosphinoxid während der Verfestigung unter von außen aufgeprägter mechanischer Beanspruchung, Scherung/innerer Bewegung der Schmelze in den festen Aggregatzustand überführt.

Acylphosphinoxide im Sinne der vorliegenden Erfindung sind Phosphinoxide, die mindestens eine Acylgruppe tragen, beispielsweise Mono-, Bls- oder Trisacylphosphine, bevorzugt Mono- oder Bisacylphosphinoxide und besonders bevorzugt Monoacylphosphinoxide.

Dies können beispielsweise solche Phosphinoxide der Formel (I) sein, 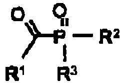 worin
R¹, R² und R³ unabhängig voneinander C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl, C₂ - C₁₈-Alkenyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus, wobei die genannten Reste jeweils durch Aryl, Alkyl, Aryloxy, Alkyloxy, Heteroatome und/oder Heterocyclen substituiert sein können, und
R² und R³ unabhängig voneinander zusätzlich Hydroxy, gegebenenfalls durch Aryl, Alkyl, Aryloxy, Alkyloxy, Heteroatome und/oder Heterocyclen substituiertes C₁ - C₁₈-Alkoxy oder R¹-(C=O)- bedeuten können.
Darin bedeuten
gegebenenfalls durch Aryl, Alkyl, Aryloxy, Alkyloxy, Heteroatome und/oder Heterocyclen substituiertes C₁ - C₁₈-Alkyl beispielsweise Methyl, Methyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Heptadecyl, Octadecyl, 1,1-Dirnethylpropyl, 1,1-Dimethylbutyl, 1,1,3,3-Tetramethylbutyl, Benzyl, 1-Phenylethyl, 2-Phenylethyl, α, α-Dimethylbenzyl, Benzhydryl, p-Tolylmethyl,1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonylethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenylthioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 3-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl,
und/oder Heterocyclen substituiertes C₁ - C₁₈-Alkoxy beispielsweise Methoxy, Ethoxy, n-Propyloxy, iso-Propyloxy, n-Butyloxy, iso-Butyloxy, sek.-Butyloxy, tert.-Butyloxy, 6-Hydroxy-1,4-dioxohexyl, 9-Hydroxy-1,4,7-trioxononyl, 12-Hydroxy-1,4,7,10-tetraoxododecyl, 6-Methoxy-1,4-dioxohexyl, 9-Methoxy-1,4,7-trioxononyl, 12-Methoxy-1,4,7,10-tetraoxododecyl, 6-Ethoxy-1,4-dioxohexyl, 9-Ethoxy-1,4,7-trioxononyl, 12-Ethoxy-1,4,7,10-tetraoxododecyl, 8-Hydroxy-1,5-dioxooctyl, 12-Hydroxy-1,5,9-trioxooctyl, 16-Hydroxy-1,5,9,13-tetraoxohexadecyl, 8-Methoxy-1,5-dioxooctyl, 12-Methoxy-1,5,9-trioxooctyl, 16-Methoxy-1,5,9,13-tetraoxohexadecyl, 8-Ethoxy-1,5-dioxooctyl, 12-Ethoxy-1,5,9-trioxooctyl, 16-Ethoxy-1,5,9,13-tetraoxohexadecyl, 10-Hydroxy-1,6-dioxodecyl, 15-Hydroxy-1,6,11-trioxopentadecyl, 10-Methoxy-1,6-dioxodecyl, 15-Methoxy-1,6,11-trioxopentadecyl, 10-Ethoxy-1,6-dioxodecyl oder 15-Ethoxy-1,6,11-trioxopentadecyl,
gegebenenfalls durch ein oder mehrere Sauerstoff- und/oder Schwefelatome und/oder ein oder mehrere substituierte oder unsubstituierte Iminogruppen unterbrochenes C₂-C₁₈-Alkyl beispielsweise 5-Hydroxy-3-oxa-pentyl, 8-Hydroxy-3,6-dioxa-octyl, 11-Hydroxy-3,6,9-trioxa-undecyl, 7-Hydroxy-4-oxa-heptyl, 11-Hydroxy-4,8-dioxa-undecyl, 15-Hydroxy-4.,8,12-trioxa-pentadecyl, 9-Hydroxy-5-oxa-nonyl, 14-Hydroxy-5,10-oxatetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4.,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Die Anzahl der Sauerstoff- und/oder Schwefelatome und/oder Iminogruppen ist nicht beschränkt. In der Regel beträgt sie nicht mehr als 5 in dem Rest, bevorzugt nicht mehr als 4 und ganz besonders bevorzugt nicht mehr als 3.

Weiterhin befinden sich zwischen zwei Heteroatomen in der Regel mindestens ein Kohlenstoffatom, bevorzugt mindestens zwei.

Substituierte und unsubstituierte Iminogruppen können beispielsweise Imino-, Methylimino-, *iso*-Propylimino, n-Butylimino oder *tert*-Butylimino sein.

### Weiterhin bedeutet

gegebenenfalls durch Aryl, Alkyl, Aryloxy, Alkyloxy, Heteroatome und/oder Heterocyclen substituiertes C₆ - C₁₂-Aryl beispielsweise Phenyl, Tolyl, Xylyl, α -Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, isoPropylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlomaphthyl, E-thoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl,
gegebenenfalls durch Aryl, Alkyl, Aryloxy, Alkyloxy, Heteroatome und/oder Heterocyclen substituiertes C₅ - C₁₂-Cycloalkyl beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie z.B. Norbornyl oder Norbomenyl,
ein fünf- bis sechsgliedriger, Sauerstoff-, Stickstoff- und/oder Schwefelatome aufweisender Heterocyclus beispielsweise Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl, Difluorpyridyl, Methylthiophenyl, Isopropylthiophenyl oder tert.-Butylthiophenyl und
C₁ bis C₄-Alkyl beispielsweise Methyl, Ethyl, Propyl, Isopropyl, n-Butyl, sec-Butyl oder tert.-Butyl.

Die Anzahl der Substituenten in den angegebenen Resten ist nicht beschränkt. In der Regel beträgt sie bei Resten mit ein bis drei Kohlenstoffatomen bis zu 3 Substituenten, bevorzugt bis zu 2 und besonders bevorzugt bis zu einem. Bei Resten mit vier bis sechs Kohlenstoffatomen beträgt sie in der Regel bis zu 4 Substituenten, bevorzugt bis zu 3 und besonders bevorzugt bis zu einem. Bei Resten mit mehr als sieben Kohlenstoffatomen beträgt sie in der Regel bis zu 6 Substituenten, bevorzugt bis zu 4 und besonders bevorzugt bis zu zwei.

Bevorzugt sind solche Acylphosphinoxide, wie sie beschrieben sind in
EP-A2 184 095, dort besonders von S. 2, Z. 4 bis S. 5, Z. 26 und den Beispielen,
DE-A1 29 09 994, dort besonders von S. 6, Z. 4 bis S. 9, Z. 14 und den Beispielen,
EP-A2 73 413, dort besonders von S. 1, Z. 27 bis S. 3, Z. 13 und den Beispielen,
DE-A1 31 39 984, dort besonders von S. 4, Z. 25 bis S. 5, Z. 20 und den Beispielen,
DE-A1 30 20 092, S. 5, Z. 31 bis S. 9, Z. 28 und den Beispielen,
EP-B1 7 508, dort besonders von S. 1, Z. 12 bis S. 4. Z.65 und den Beispielen,
DE-C2 42 31 579, dort besonders S. 2, Z. 15 bis Z. 51 und den Beispielen,
EP-A2 262 629, dort besonders S. 2, Z. 29 bis S. 3, Z. 54 und den Beispielen,
EP-A2 413 657, dort besonders S. 1, Z. 4 bsi S. 5, Z. 22 und den Beispielen,
EP-B1 942 937, dort besonders S. 2, Z. 1 bis S. 5, Z. 44 und den Beispielen,
EP-A2 446175, dort besonders S. 2, Z.17, S. 5, Z. 8 und den Beispielen sowie die in den deutschen Patentanmeldungen mit dem Aktenzeichen 10206096.7, 10206117.3 und 10206097.5 und dem Anmeldetag 13.02.2002.

Auf diese Schriften sei hiermit im Rahmen dieser Offenbarung jeweils ausdrücklich Bezug genommen.

Besonders bevorzugt sind solche Acylphosphinoxide, in denen
R¹ ausgewählt ist aus der Gruppe Phenyl, 2,6-Dimethylphenyl, 2,4,6-Trimethylphenyl, 2,6-Dimethoxyphenyl oder 2,6-Dichlorphenyl,
R² ausgewählt ist aus der Gruppe Phenyl, 4-Methylphenyl, 2,6-Dimethylbenzoyl, 2,4,6-Trimethylbenzoyl, 2,6-Dimethoxybenzoyl oder 2,6-Dichlorbenzoyl und
R³ ausgewählt ist aus der Gruppe Phenyl, 4-Methylphenyl oder 2,4,4-Trimethylpentyl.

Ganz besonders bevorzugt ist
2,4,6-Trimethylbenzoyl-diphenyl-phosphinoxid,
Bis(2,4,6-trimethylbenzoyl)-phenylphosphinoxid und
Bis(2,6-dimethoxybenzoyl)-2,4,4-trimethylpentylphosphinoxid.

Insbesondere bevorzugt ist 2,4,6-Trimethylbenzoyl-diphenyl-phosphinoxid.

Das erfindungsgemäße Verfahren ist bevorzugt für solche Acylphosphinoxide verwendbar, deren Schmelzpunkte oberhalb der Raumtemperatur, d.h. 23 °C, liegen. Bevorzugt liegt der Schmelzpunkt der für das erfindungsgemäß verwendbare Verfahren einsetzbaren Acylphosphinoxide bei mindestens 40 °C, besonders bevorzugt bei mindestens 50 °C und besonders bevorzugt bei mindestens 70 °C.

Unter einer Schmelze wird hier erfindungsgemäß eine flüssige Mischung verstanden, die zu mindestens 85, bevorzugt zu mindestens 90 und besonders bevorzugt zu mindestens 95 Gew.% das betreffende Acylphosphinoxid enthält. Im Gegensatz dazu wird erfindungsgemäß als eine Lösung ein molekulardisperses flüssiges System bezeichnet, in dem der Acylphosphinoxid-Gehalt unter 85, beziehungsweise unter 90, beziehungsweise unter 95 Gew.% liegt.

Erfindungsgemäß kann das Acylphosphinoxid auch dispers eingesetzt werden, wobei ausdrücklich eine molekulardisperse Verteilung, also eine Lösung ausgeschlossen ist. Dispers verteilt heißt erfindungsgemäß flüssig als Schmelze in einer anderen Phase verteilt, bevorzugt in Form einer Emulsion, wobei der Durchmesser der Tröpfchen mindestens 0,1 pm beträgt, bevorzugt mindestens 1 µm und besonders bevorzugt mindestens 5 µm. Ganz besonders bevorzugt wird das Acylphosphinoxid jedoch als kontinuierliche Schmelzephase eingesetzt.

Die andere Phase, die die Acylphosphinoxidtröpfchen umgibt, kann eine mit dem Acylphosphinoxid wenig- oder bevorzugt unmischbare Flüssigkeit oder ein Gas sein, bevorzugt eine Flüssigkeit. Ebenso kann die Schmelze vor oder bei der Verfestigung mit bereits vorhandenem, arteigenen oder andersartigen Feststoff in Kontakt kommen.

Wird eine Flüssigkeit als umgebende Phase verwendet, so sei diese im verwendeten Konzentrations- und Temperaturbereich mit dem Acylphosphinoxid nicht mischbar.

Bevorzugt ist es, wenn das Acylphosphinoxid in der Flüssigkeit zu weniger als 10 Gew%, bevorzugt zu weniger als 5 Gew%, besonders bevorzugt zu weniger als 2 Gew% und ganz besonders bevorzugt zu weniger als 1 Gew% löslich ist.

Bevorzugt ist es zusätzlich, wenn die Flüssigkeit im Acylphosphinoxid zu weniger als 10 Gew%, bevorzugt zu weniger als 5 Gew%, besonders bevorzugt zu weniger als 2 Gew% und ganz besonders bevorzugt zu weniger als 1 Gew% löslich ist.

Um einen einfachen Weg der Feststofferzeugung zu finden, wurde versucht, eine Acylphosphinoxid-Schmelze direkt, d.h. ohne Einsatz eines Lösemittels und damit unter Vermeidung obiger Nachteile, in einen Feststoff zu überführen. Die Schmelze kann dabei direkt als Reaktionsschmelze anfallen oder aber nach geeigneten, an sich bekannten Aufarbeitungsschritten wie Destillation, Rektifikation, Extraktion, gegebenenfalls gefolgt von Wäschen oder Strippprozessen, aus dem Reaktionsaustrag hervorgehen. Ein solches Feststoffbildungsverfahren ist besonders dann vorteilhaft, wenn in den vorangehenden Verfahrensstufen kein Lösemittel eingesetzt wird.

Eine durch Reaktion von Trimethylbenzoylchlorid mit Ethoxidiphenylphosphin und anschließender mehrstufiger Extraktion erhaltene Schmelze von 2,4,6-Trimethylbenzoyl-diphenyl-phosphinoxid (Schmelzpunkt etwa 92 °C), die in einem Gefäß befindlich oder in eine Schale geschüttet abkühlen gelassen wird, wird mit der Abkühlung der Schmelze zunehmend hochviskos und es findet über viele Stunden bis mehrere Tage hinweg keine oder nur eine sehr träge ablaufende, in der Regel nur partielle Feststoffbildung statt.

Eine solche "ruhende" Abkühlung ohne ausreichende innere Bewegung der Schmelze führt also nicht zu einem praktikablen /wirtschaftlichen Feststoffbildungsschritt. Die bekannten Verfahren wie z.B.:
Pastillierung, d.h. die Aufgabe von Schmelzetropfen auf eine Kühlfläche, beispielsweise ein Stahlband oder Stahlteller, auf der sich die Tropfen üblicherweise im Bereich von wenigen Minuten ruhend verfestigen sollen, oder
Schuppung, d.h. die Aufgabe von einem Schmelzefilm auf eine Kühlfläche, beispielsweise ein Stahlband oder eine Walze, auf der sich der Schmelzefilm im Bereich von wenigen Minuten zu einer Feststoffschicht umwandeln soll, die anschließend mit einem Messer unter Erzeugung von Bruchstücken, den Schuppen, abgenommen werden kann,
führen hier nicht zum Erfolg.

Ebenso ist ein Versprühen der Schmelze in ein gekühltes Gas zur Erzeugung von Tröpfchen, die im Fallen durch das Gas zu einem dispersen Feststoff erstarren sollen, nicht möglich.

Erfindungsgemäß wesentlich ist, daß Schmelzen oder Dispersionen, bevorzugt Schmelzen oder Emulsionen und besonders bevorzugt Schmelzen von Acylphosphinoxiden sich in kurzen Zeiten und problemlos in einen Feststoff umwandeln lassen, wenn man die Schmelze während der Verfestigung einer mechanischen Beanspruchung aussetzt und diese als Folge davon innerlich fließt, geschert beziehungsweise innerlich bewegt wird.

Unter einer mechanischen Beanspruchung werden erfindungsgemäß solche Maßnahmen verstanden, die in der als kontinuierliche oder disperse Phase vorliegenden Schmelze eine Konvektion hervorrufen, die über die durch den Temperaturgradienten hervorgerufene natürliche Konvektion hinausgeht.

Gibt man beispielsweise eine Schmelze auf eine Kühlplatte auf und rührt die Schmelze leicht per Hand (siehe Beispiele), wird die Ausbildung eines harten Feststoffes im Bereich von nur 1 bis 10 min Dauer (je nach Kühlplattentemperatur) erreicht.

Ebenso wurde gefunden, dass eine Schmelze von Acylphosphinoxiden problemlos in einen dispersen Feststoff umgewandelt werden kann, indem man die Schmelze in einen gerührten oder umgewälzten Apparat (z.B. DTB (Discotherm-B Apparat) der Fa. List, Schaufeltrockner, Rührkessel) einbringt, und ausgehend von der kontinuierlichen Schmelzephase unter Rühren und Wärmeabfuhr die Schmelze über den Zustand einer Suspension zu einem gut rieselfähigen Feststoff verarbeitet (diskontinuierliche Variante). Die Verfestigung läuft dabei ebenfalls im Bereich von einigen Minuten bis wenigen 10 min ab.

Die mechanische Beanspruchung der Schmelze, also die Krafteinwirkung auf die Schmelze, verursacht Scherung beziehungsweise innere Bewegung. Beispiele für mechanisches Beanspruchen sind Rühren, Umpumpen, Rakeln, Kratzen, Behandeln mit Ultraschall oder ein Gasstrahl, beispielsweise durch eine Düse oder einen Spalt, der durch die Schmelze geleitet oder auf dessen Oberfläche gerichtet wird.

Als weitere Variante kann die Schmelze in einem Apparat mit einem Feststoff vermischt werden, beispielsweise kann die Schmelze auf eine Vorlage aufgegeben oder ein Feststoff zur Schmelze hinzugegeben werden, und nach Zerteilung durch das mit dem Rühren verbundene Mischen/Bewegen der Feststoff- und Schmelzeteilchen aus einem dispergierten Schmelzezustand heraus zu dispersem Feststoff verarbeitet werden (kontinuierliche oder diskontinuierliche Fahrweise).

Die Vorlage kann dabei arteigen oder andersartig beschaffen sein, d.h. es kann sich um das zu reinigende, feste Acylphosphinoxid handeln oder um einen anderen Feststoff, beispielsweise ein anderes Acylphosphinoxid.

Eine weitere Ausführungsform ist das kontinuierliche oder diskontinuierliche Einbringen der Schmelze in ein Feststoffbett, das nicht mit mechanischen Hilfsmitteln gerührt oder gemischt wird, sondern über eine Fluidströmung durchmischt/bewegt und dabei gekühlt wird. In der Regel wird dafür ein Gas als Fluid verwendet, so daß eine Wirbelschicht entsteht.

Die im erfindungsgemäßen Verfahren entstehende Partikelgrößenverteilung des Feststoffes kann durch Veränderung der Durchführbedingungen des Verfahrens und durch Eigenschaften des Apparates, in dem das Verfahren durchgeführt wird, gesteuert werden. Veränderbare Größen für eine Partikelgrößensteuerung sind dabei z.B. Art, Intensität und Dauer des Rührens/Mischens, Art der Schmelzezuführung, beispielsweise mit oder ohne Vorverteilung, z.B. über Düsen, Prallbleche oder Verteiler, Vorhandensein oder Art einer Feststoffvorlage, beispielsweise artfremd oder arteigen, Betriebstemperaturen, beispielsweise bis zu 90 K unter dem Schmelzpunkt des Phosphinoxids, Art des Abkühlvorgangs, beispielsweise mit einer Abkühlrate von 1 bis 100, bevorzugt 5 bis 60 K/h und Verweilzeit/spezifischer Schmelzedurchsatz von einigen Minuten bis wenigen Stunden.

Mit diesen Parametern können engere oder breitere sowie gröbere oder feinere Partikelgrößenverteilungen erzeugt werden.

Im Allgemeinen wird eine umso geringere Partikelgröße erhalten, wenn ein Energieeintrag länger und intensiver oder bei starker Vorverteilung erfolgt und eine breite Partikelgrößenverteilung, wenn keine Feststoffvorlage verwendet wird.

Als weitere Variante kann die Acylphosphinoxid-Schmelze mit einer Flüssigkeit vermischt werden, in der die Schmelze praktisch unlöslich ist, so daß sich zwei Flüssigphasen ausbilden.

Bevorzugte Flüssigkeiten dafür sind solche, die, wie oben angegeben, nicht mischbar sind und die angegeben Löslichkeiten des Acylphosphinoxids in der Flüssigkeit und die angegeben Löslichkeiten der Flüssigkeit im Acylphosphinoxid aufweisen, beispielsweise Flüssigkeiten mit einem E_{T}(30)-Wert von mehr als 50, bevorzugt von mehr als 56 und besonders bevorzugt ionische Flüssigkeiten (Der E_{T}(30)-Wert ist ein Maß für die Polarität und wird von C. Reichardt in Reichardt, Christian Solvent Effects in Organic Chemistry Weinheim : VCH, 1979. - XI, (Monographs in Modern Chemistry ; 3), ISBN 3-527-25793-4 Seite 241 bis Seite 242 beschrieben.). Auf die bei Reichardt, a.a.O. auf S. 242 angeführten Lösungsmittel mit einem E_{T}(30)-Wert von mehr als 50 und insbesondere die mit einem E_{T}(30)-Wert von mehr als 56 sei hiermit durch Referenznahme ausdrücklich Bezug genommen und diese seien hiermit Bestandteil der vorliegenden Offenbarung. Durch intensives Bewegen, z.B. in einem Rühr- oder einem Umpumpbehälter, kann das Acylphosphinoxid in einen dispers vorliegenden Schmelzezustand und durch Wärmeabfuhr in einen dispersen Feststoff umgewandelt werden. Anschließend ist zwar in der Regel ein Abtrennen und Trocknen des Feststoffes notwendig; die anderen genannten Nachteile einer Feststoffgewinnung durch Lösungskristallisation werden aber vermieden, da die Verluste an Wertprodukt über die Flüssigkeit minimiert werden.

Die Verarbeitung der Schmelze zu einem dispersen Feststoff bedeutet, dass die zunächst i.d.R. als kontinuierliche Phase vorliegende Schmelze bei/nach Einbringen in den Verfestigungsapparat zerteilt wird (z.B. durch Emulgieren in einer Flüssigkeit oder durch ZerteilenlUntermischen in ein bewegtes Feststoffbett), und dann unter mechanischer Beanspruchung/innerer Bewegung, ausgelöst durch Strömungskräfte und/oder Stoßereignisse mit Partikeln oder Einbauten oder Wänden der Apparate, die zerteilten Schmelzefraktionen als eigene Partikeln und/oder als auf bereits vorhandenen Partikeln aufgezogene Schmelzefilme und/oder zwischen bereits vorhandenen Partikeln unter Bildung von Agglomeraten verfestigt werden.

Es kann aber auch eine Überführung in einen dispersen Feststoff dadurch erfolgen, dass ausgehend von der kontinuierlichen Schmelzephase zunächst in dieser Schmelze dispergiert vorliegende Feststoffpartikeln gebildet werden (Suspension), dann unter fortgesetzter Wärmeabfuhr immer mehr Feststoffpartikeln aus der Schmelze entstehen, so dass schließlich die kontinuierliche Schmelzephase übergeht in eine zusammen mit dem Feststoff dispers vorliegende Schmelzephase, und letztlich vollständig in einen dispersen Feststoff umgewandelt wird. In all diesen Schritten erfolgt die Bildung von neuem Feststoff aus der Schmelze heraus unter mechanischer Beanspmchungfinnerer Bewegung der sich umwandelnden Schmelze.

Bei der Feststoffbildung aus der nicht-ruhenden, mechanisch beanspruchten und somit innerlich bewegten Acylphosphinoxid-Schmelze heraus hat sich gezeigt, dass ein Impfen der feststofffreien Schmelze mit in der Regel arteigenem Feststoff nicht erforderlich ist. Durch Impfen kann die Feststoffbildung aber in einem gewissen Maße beschleunigt werden.

Durch Versetzen mit einem artfremden Feststoff, beispielsweise 2,4,6-Trimethylbenzoyl-diphenyl-phosphinoxid mit Bis(2,4,6-trimethylbenzoyl)-phenylphosphinoxid oder Bis(2,4,6-trimethylbenzoyl)-phenylphosphinoxid mit Bis(2,6-dimethoxybenzoyl)-2,4,4-trimethylpentylphosphinoxid läßt sich so eine Formulierung von unterschiedlichen Acylphosphinoxiden erreichen, in der das eine Acylphosphinoxid die Erstarrung des anderen unterstützt.
Ebenso hat sich bei der nicht-ruhenden Acylphosphinoxid-Schmelzeverfestigung gezeigt, dass die Temperatur des zur Wärmeabfuhr verwendeten Kühlmediums/der zur Wärmeabfuhr eingesetzten Kühlfläche nur einen mäßigen Einfluss auf die Feststoffbildungszeiten hat. So ist in der Regel eine Temperatur bis zu 90 K unter dem Schmelzpunkt des Phosphinoxids einsetzbar, bevorzugt 5 bis 70 K, besonders bevorzugt 20 bis 60 K. Es kann aber nützlich sein, das Temperaturniveau der Kühlung nahe am Schmelzpunkt zu wählen, z.B. 5 bis 20 K unter Schmelzpunkt.

Die Wärmeabführung bei der Bildung des Feststoffs kann bevorzugt durch Kühlung von Apparatewänden erfolgen. Besonders bevorzugt wird die Wärmeabführung durch indirekte Kühlung über Wärmetauscherflächen bewirkt. Als Wärmeträger können alle hierzu geeigneten Stoffe und Mischungen eingesetzt werden, insbesondere Wasser, Wasser/Methanol- oder Wasser/Glykol-Gemische.

Es ist in einer weiteren Ausgestaltung der Erfindung möglich, die zur Verfestigung notwendige Wärmeabfuhr zumindest teilweise vor und nicht während der Verfestigung vorzunehmen. Dies kann verbunden sein mit einer Unterkühlung der Schmelze, d.h. mit einer Abkühlung unter den Schmelzpunkt. Bei entsprechend langsamer Feststoffbildungskinetik ist ein solches Verfahren aber durchführbar.

Der nach erfindungsgemäßer Verfestigung vorliegende Feststoff kann einer oder mehreren Nachbehandlungen mittels an sich bekannter Verfahren unterzogen werden, um die Feststoffeigenschaften wunschgemäß zu verändern. Als Beispiele seien hier die Mahlung und/oder Siebung des Feststoffes zur Beeinflussung der Partikelgrößenverteilung genannt. Bei diesen Nachbehandlungsschritten anfallende Feststoffanteile mit ungewünschten Eigenschaften (z.B. zu grobe/feine Partikeln) werden bevorzugt aufgeschmolzen oder aber auch unaufgeschmolzen in die Feststoffbildungsstufe zurückgeführt. Eine Zuführung an eine andere Verfahrensstelle ist aber auch möglich.

Wird das Acylphosphinoxid aus einer Emulsion heraus verfestigt, können während und/oder nach der Fest-Flüssig-Trennung weitere Verfahrenschritte zur Steigerung der Reinheit des Feststoffes vorgesehen werden. Besonders vorteilhaft kann nach dem Abtrennen des Feststoffes von der Flüssigkeit ein ein- oder mehrstufiges Waschen durchgeführt werden. Die verwendete Waschflüssigkeit unterliegt hierbei keiner Einschränkung, bevorzugt sind Wasser, Methanol, Ethanol, Aceton oder Mischungen davon.

Das Waschen kann in hierfür üblichen Apparaten erfolgen, wie beispielsweise Waschkolonnen, wie z.B. in der DE-A1 100 36 881 beschrieben, in denen die Abtrennung der Flüssigkeit und das Waschen in einem Apparat erfolgt, in Zentrifugen, die ein- oder mehrstufig betrieben werden können, oder in Filternutschen oder Bandfiltern. Das Waschen kann auf Zentrifugen oder Bandfiltern ein- oder mehrstufig durchgeführt werden, wobei die Waschflüssigkeit bevorzugt im Gegenstrom zum Feststoff geführt wird.

Das Massenverhältnis von Waschflüssigkeit zu Feststoff liegt in der Regel im Bereich von 0,1 bis 4, besonders bevorzugt im Bereich von 0,2 bis 1 kg Waschflüssigkeit pro 1 kg Feststoff.

Enthält die zu verfestigende Schmelze noch Anteile an flüchtigen Komponenten, kann die Verfestigung unter zumindest partieller Verdampfung dieser Anteile im Vakuum erfolgen.

Die Erstarrung kann an Luft oder unter Schutzgas (Inertgas wie Stickstoff, Edelgase, CO₂ etc.) durchgeführt werden.

Die folgenden Beispiele sollen die Eigenschaften der Erfindung erläutern, ohne sie aber einzuschränken.

### Beispiele

Als "Teile" seien in dieser Schrift, wenn nicht anders angegeben, "Gewichtsteile" verstanden.

### Vergleichsbeispiel 1

Eine durch Reaktion von Trimethylbenzoylchlorid mit Ethoxidiphenylphosphin (Reaktion bei 80-85°C in Anwesenheit von Dimethylcyclohexylamin) und anschließender 2-facher Extraktion (erste Extraktion mit basischer Wasser-/Sodalösung; dann mit Wasser) erhaltene Schmelze von 2,4,6-Trimethylbenzoyl-diphenyl-phosphinoxid (TPO) (Gehalt an TPO: 98,8 Flächen% (FI%) HPLC) wurde mit 95°C auf eine Edelstahl-Kühlplatte (gekühlt mit einem Kühlmittel von 30°C) als etwa 3 mm dicker Film aufgegeben, der anschließend auf der Platte ruhte. Auch nach 7 Stunden war keine Umwandlung in einen Feststoff erfolgt; die Schmelze blieb als unterkühlte hochzähe Masse erhalten.

### Beispiel 1

Die gleiche Schmelze wie in Vergleichsbeispiel 1 wurde mit gleicher Aufgabetemperatur auf die mit 30°C kaltem Kühlmedium gekühlte Platte als 3 mm dicker Film aufgegeben und anschließend mit einem Spatel langsam gerührt/geschert. Nach etwa 7 bis 8 Minuten lag ein brockiger Feststoff vor.

### Beispiel 2

Die gleiche Schmelze wie in Vergleichsbeispiel 1 wurde mit gleicher Aufgabetemperatur auf die mit 50°C kaltem Kühlmedium gekühlte Platte als 3 mm dicker Film aufgegeben und anschließend mit einem Spatel langsam gerührt/geschert. Nach etwa 2,5 Minuten lag ein brockiger Feststoff vor.

### Vergleichsbeispiel 2

Eine durch Reaktion von Trimethylbenzoylchlorid mit Ethoxidiphenylphosphin (Reaktion bei 80-85°C in Anwesenheit von Dimethylcyclohexylamin) und anschließender 2 facher Extraktion (erste Extraktion mit basischer Wasser-/Sodalösung; dann mit Wasser) erhaltene Schmelze von 2,4,6-Trimethylbenzoyl-diphenyl-phosphinoxid (Gehalt an TPO: 99,1 FI.% HPLC) wurde mit 98 °C in einen 0,5 I-Glaskotben gefüllt und kühlte darin ruhend auf Raumtemperatur ab.
Nach 4 Tagen waren lediglich an wenigen Stellen einzelne nadelige Kristallausbildungen zu sehen; der größte Teil der Schmelze lag als unterkühlte hochzähe Masse vor.

### Beispiel 3

Eine durch Reaktion von Trimethylbenzoylchlorid mit Ethoxidiphenylphosphin (Reaktion bei 80-85°C in Anwesenheit von Dimethylcyclohexylamin) und anschließender 2-facher Extraktion (erste Extraktion mit basischer Wasser-/Sodalösung; dann mit Wasser) erhaltene Schmelze von 2,4,6-Trimethylbenzoyl-diphenyl-phosphinoxid (Gehalt an TPO: 99,2 FI.% HPLC) wurde in einem ersten Versuch mit 104°C in einem 0,7 l großen Laborapparat vom Typ DTB in einer Menge von 0,35 kg vorgelegt. Der Apparat wurde mit einer Drehzahl von 30 U/min betrieben und mit einer Kühlmitteltemperatur von 62°C gekühlt. Die Schmelze kühlte ab, trübte sich bei einer Temperatur von etwa 80°C ein (beginnende Feststoffbildung) und wandelte sich dann innerhalb von 14 min über den Zustand einer Suspension zu einem rieselfähigen, überwiegend feinkömigen Feststoff um.

### Beispiel 4

Die gleiche Schmelze wie in Beispiel 3 beschrieben wurde mit 105°C bei einem Massenstrom von 3 kg/h kontinuierlich in einen 5 l großen Laborapparat vom Typ Schaufeltrockner gegeben, der vor Beginn der Schmelzezuführung bereits mit 1,5 kg Feststoff gefüllt war. Der Apparat wurde mit einer Drehzahl von 30 U/min betrieben und mit einer Kühlmitteltemperatur von 20°C gekühlt. Die Schmelze wurde durch die drehenden Mischelemente in den im Apparat befindlichen Feststoff eingemischt und am der Schmelzeaufgabe gegenüberliegenden Ende des Apparats nach einer mittleren Verweilzeit von etwa 45 min als rieselfähiger, körniger Feststoff ausgetragen. Die Temperatur des ausgetragenen Feststoffes betrug 25°C.
Die Partikelgrößenverteilung bei dieser Art der Feststoffbildung war: 9 Gew.% > 2,8 mm; 50,5 Gew.% von 0,9 bis 2,8 mm; 17,9 Gew.% von 0,56 bis 0,9 mm; Rest < 0,56 mm.

### Beispiel 5

Eine durch Reaktion von Trimethylbenzoylchlorid mit Ethoxidiphenylphosphin erhaltene Schmelze von 2,4,6-Trimethylbenzoyl-diphenyl-phosphinoxid (Gehalt an TPO: 95,8 FI.% HPLC) wurde mit 100 °C auf eine Edelstahl-Kühlplatte (gekühlt mit einem Kühlmittel von 60°C) als etwa 3,5 mm dicker Schmelzebelag aufgegeben und bei der Abkühlung mit einem Spatel langsam gerührt/geschert. Nach 2 Minuten lag ein harter, krümeliger Feststoff vor.

### Vergleichsbeispiel 3

Eine 2,4,6-Trimethylbenzoyl-bis(2,5-dimethylphenyl)-phosphinoxid-Schmelze mit einem Schmelzpunkt von 136°C wurde in 3 Versuchen jeweils mit 145°C als etwa 3 mm dicker Film auf eine Edelstahl-Kühlplatte aufgegeben, auf der der Schmelzefilm anschließend ruhte. Die Platte wurde gekühlt mit Kühlmitteltemperaturen von 50, 80 und 110°C. In allen drei Fällen war innerhalb von 15 Minuten keine, auch nicht teilweise Feststoffbildung erkennbar. Die Schmelze blieb als unterkühlter, klarer und zähklebriger Film auf der Platte liegen.

### Beispiel 6 und 7

Die gleiche Schmelze wie in Vergleichsbeispiel 3 wurde in zwei weiteren Versuchen mit gleicher Aufgabetemperatur (145°C) wieder als 3 mm dicker Film auf die Kühlplatte aufgegeben und anschließend mit einem Spatel langsam gerührt/geschert. In beiden Versuchen lag nach kurzer Zeit ein harter, brockiger Feststoff vor (bei einer Kühlmediumtemperatur von 80°C nach 4,5 Minuten, bei einer Kühlmediumtemperatur von 110°C nach 2,5 Minuten).

## Patentansprüche

1. Verfahren zur Herstellung von Acylphosphinoxid Feststoffen mit Schmelzpunkten oberhalb Raumtemperatur, **dadurch gekennzeichnet, daß** man das nach Reaktion oder Aufarbeitung als kontinuierliche Schmelzephase oder disperse Schmefzephase vorliegende Acylphosphinoxid während der Verfestigung unter von außen aufgeprägter mechanischer Beanspruchung, Scherung und/oder innerer Bewegung der Schmelze in den festen Aggregatzustand überführt.

2. Verfahren nach Anspruch 1, **dadurch gekennzeichnet, daß** es sich bei der Schmelze um flüssige Mischungen handelt, die zu mindestens 85 Gew% das betreffende Acylphosphinoxid enthalten.

3. Verfahren nach Anspruch 1, **dadurch gekennzeichnet, daß** das dispergiert vorliegende Acylphosphinoxid als Tröpfchen mit einem Durchmesser von mindestens 0,1 µm in einer anderen Phase verteilt ist.

4. Verfahren nach einem der vorliegenden Ansprüche, **dadurch gekennzeichnet, daß** die mechanische Beanspruchung der Schmelze durch Rühren, Umpumpen, Rakeln, Kratzen, Behandeln mit Ultraschall oder einen Gasstrahl der durch die Schmelze geleitet oder auf dessen Oberfläche gerichtet wird, hervorgerufen wird.

5. Verfahren nach einem der vorstehenden Ansprüche, **dadurch gekennzeichnet, daß** man die Schmelze mit einem Feststoff vermischt.

6. Verfahren nach einem der vorstehenden Ansprüche, **dadurch gekennzeichnet, daß** man die Schmelze mit einer Flüssigkeit vermischt, in der die Schmelze zu nicht mehr als 10 Gew% löslich ist.

7. Verfahren nach Anspruch 6, **dadurch gekennzeichnet, daß** man die Schmelze mit einer Flüssigkeit vermischt, die zu nicht mehr als 10 Gew% im Acylphosphinoxid löslich ist.

8. Verfahren nach Anspruch 6 oder 7, **dadurch gekennzeichnet, daß** es sich bei der Flüssigkeit um eine ionische Flüssigkeit handelt.

9. Verfahren nach einem der vorliegenden Ansprüche, **dadurch gekennzeichnet, daß** es sich bei dem Acylphosphinoxid um eines der Formel (I) handelt, 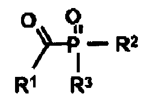 worin
R¹, R² und R³ unabhängig voneinander C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl, C₂ - C₁₈-Alkenyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus, wobei die genannten Reste jeweils durch Aryl, Alkyl, Aryloxy, Alkyloxy, Heteroatome und/oder Heterocyclen substituiert sein können, und
R² und R³ unabhängig voneinander zusätzlich Hydroxy, gegebenenfalls durch Aryl, Alkyl, Aryloxy, Alkyloxy, Heteroatome und/oder Heterocyclen substituiertes C₁ - C₁₈-Alkoxy oder R¹-(C=O)- bedeuten können

10. Verfahren nach einem der vorliegenden Ansprüche, **dadurch gekennzeichnet, daß** das Acylphosphinoxid ausgewählt ist aus der Gruppe 2,4,6-Trirnethylbenzoyl-diphenyl-phosphinoxid, Bis(2,4,6-trimethylbenzoyl)-phenylphosphinoxid und Bis(2,6-dimethoxybenzoyl)-2,4,4-trimethylpentylphosphinoxid.

## Claims

1. A process for the preparation of acylphosphine oxide solids with melting points above room temperature, which comprises converting the acylphosphine oxide present following reaction or work-up as a continuous melt phase or disperse melt phase into the solid state of aggregation during solidification with externally exerted mechanical stress, shearing and/or internal agitation of the melt.

2. The process according to claim 1, wherein the melt is liquid mixtures which comprise the acylphosphine oxide in question in an amount of at least 85% by weight.

3. The process according to claim 1, wherein the acylphosphine oxide present in dispersed form is distributed as droplets with a diameter of at least 0.1 µm in another phase.

4. The process according to any of the present claims, wherein the mechanical stress of the melt is caused by stirring, pumping, knife coating, scratching, treatment with ultrasound or a stream of gas, which is passed through the melt or directed onto its surface.

5. The process according to any one of the preceding claims, wherein the melt is mixed with a solid.

6. The process according to any of the preceding claims, wherein the melt is mixed with a liquid in which the melt is soluble in an amount of not more than 10% by weight.

7. The process according to claim 6, wherein the melt is mixed with a liquid which is soluble in the acylphosphine oxide in an amount of not more than 10% by weight.

8. The process according to claim 6 or 7, wherein the liquid is an ionic liquid.

9. The process according to any of the present claims, wherein the acylphosphine oxide is one of the formula (I) 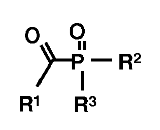 in which
R¹, R² and R³, independently of one another, are C₁-C₁₈-alkyl, C₂-C₁₈-alkyl optionally interrupted by one or more oxygen and/or sulfur atoms and/or one or more substituted or unsubstituted imino groups, C₂-C₁₈-alkenyl, C₆-C₁₂-aryl, C₅-C₁₂-cycloalkyl or a five- to six-membered heterocycle having oxygen, nitrogen and/or sulfur atoms, where said radicals can each be substituted by aryl, alkyl, aryloxy, alkyloxy, heteroatoms and/or heterocycles, and
R² and R³, independently of one another, may additionally be hydroxy, C₁-C₁₈-alkoxy optionally substituted by aryl, alkyl, aryloxy, alkyloxy, heteroatoms and/or heterocycles, or R¹-(C=O)-.

10. The process according to any of the present claims, wherein the acylphosphine oxide is chosen from the group consisting of 2,4,6-trimethylbenzoyldiphenylphosphine oxide, bis(2,4,6-trimethylbenzoyl)phenylphosphine oxide and bis(2,6-dimethoxybenzoyl)-2,4,4-trimethylpentylphosphine oxide.

## Revendications

1. Procédé pour la préparation de solides de type oxyde d'acylphosphine, présentant des points de fusion supérieurs à la température ambiante, **caractérisé en ce qu'**on transfère l'oxyde d'acylphosphine, se trouvant sous forme de phase de masse fondue continue ou de phase de masse fondue dispersée après la réaction ou le traitement, pendant la solidification, sous sollicitation mécanique exercée à partir de l'extérieur, cisaillement et/ou mouvement interne de la masse fondue dans un état d'agrégat solide.

2. Procédé selon la revendication 1, **caractérisé en ce qu'**il s'agit, pour la masse fondue, de mélanges liquides qui contiennent au moins 85% en poids de l'oxyde d'acylphosphine concerné.

3. Procédé selon la revendication 1, **caractérisé en ce que** l'oxyde d'acylphosphine se trouvant sous forme dispersée est réparti sous forme de gouttes présentant un diamètre d'au moins 0,1 µm dans une autre phase.

4. Procédé selon l'une quelconque des revendications précédentes, **caractérisé en ce que** la sollicitation mécanique de la masse fondue est provoquée par agitation, pompage en circulation, raclage, grattage, traitement aux ultrasons ou un jet de gaz qui est guidé dans la masse fondue ou orienté sur sa surface.

5. Procédé selon l'une quelconque des revendications précédentes, **caractérisé en ce qu'**on mélange la masse fondue avec un solide.

6. Procédé selon l'une quelconque des revendications précédentes, **caractérisé en ce qu'**on mélange la masse fondue avec un liquide dans lequel la masse fondue n'est pas soluble à plus de 10% en poids.

7. Procédé selon la revendication 6, **caractérisé en ce qu'**on mélange la masse fondue avec un liquide qui n'est pas soluble dans l'oxyde d'acylphosphine à raison de plus de 10% en poids.

8. Procédé selon la revendication 6 ou 7, **caractérisé en ce qu'**il s'agit, pour le liquide, d'un liquide ionique.

9. Procédé selon l'une quelconque des revendications précédentes, **caractérisé en ce qu'**il s'agit, pour l'oxyde d'acylphosphine, d'un oxyde de formule (I), 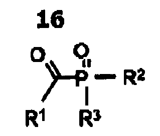 où
R¹, R² et R³ peuvent signifier, indépendamment les uns des autres, C₁-C₁₈-alkyle ; C₂-C₁₈-alkyle, C₂-C₁₈-alcényle, C₆-C₁₂-aryle, C₅-C₁₂-cycloalkyle le cas échéant interrompu par un ou plusieurs atomes d'oxygène et/ou de soufre et/ou un ou plusieurs groupes imino substitués ou non substitués ; ou un hétérocycle de cinq à six chaînons, présentant des atomes d'oxygène, d'azote et/ou de soufre, les radicaux mentionnés pouvant à chaque fois être substitués par aryle, alkyle, aryloxy, alkyloxy, des hétéroatomes et/ou des hétérocycles, et
R² et R³ peuvent signifier, indépendamment l'un de l'autre, en outre hydroxy ; C₁-C₁₈-alcoxy le cas échéant substitué par aryle, alkyle, aryloxy, alkyloxy, des hétéroatomes et/ou des hétérocycles ; ou R¹-(C=O)-.

10. Procédé selon l'une quelconque des revendications précédentes, **caractérisé en ce que** l'oxyde d'acylphosphine est choisi dans le groupe formé par l'oxyde de 2,4,6-triméthylbenzoyldiphénylphosphine, l'oxyde de bis(2,4,6-triméthylbenzoyl)-phénylphosphine et l'oxyde de bis(2,6-diméthoxybenzoyl)-2,4,4-triméthylpentylphosphine.
